# EUROPEAN PATENT APPLICATION

(11) **EP 4 520 996 A1**
(43) Date of publication of application: **12.03.2025**
(21) Application number: 23799059.3
(22) Date of filing: 05.05.2023
(51) Int. Cl.: F16D 66/02, F16D 49/00, B60T 17/22

(54) **DEVICE, SYSTEM AND METHOD FOR MONITORING WEAR OF FRICTION MATERIAL IN A DRUM BRAKE**

(30) Priority: 06.05.2022 BR 102022008828
(71) Applicant: Instituto Hercílio Randon, 95181899 Caixas do Sul (BR)
(72) Inventor: BOARETTO, Joel, 95032-180 Caxias do Sul (BR); SCHMITZ, Alessander Specht, 95012-370 Caxias do Sul (BR); GELLER, Arthur Gassen, 95055-100 Caxias do Sul (BR)
(74) Representative: Grünecker Patent- und Rechtsanwälte PartG mbB
(86) International application number: PCT/BR2023/050138
(87) International publication number: WO 2023/212794

(57) **Abstract**

The present invention describes a device for monitoring wear of friction material in a drum brake system, in addition to a system and process for monitoring wear of friction material, based on a relative movement between the adjuster and the shaft, this relative movement being correlated with the wear of the friction material. Specifically, the monitoring device comprising a sensor assembly that perceives the relative movement between the adjuster and the shaft, and a processing unit that correlates data from said relative movement with the wear of the friction material is presented. The present invention is in the fields of automotive, on-board electronics, brake systems and sensing.

## Description

### Field of the Invention

The present invention describes a device for monitoring the wear of friction material in drum brake, more specifically, the device comprising a sensor assembly that perceives a relative movement correlated with wear of the friction material. The present invention is in the fields of automotive, on-board electronics, brake systems and sensing.

### Background of the Invention

Many vehicles use what is known as drum brake in their braking system, which are found especially in heavy vehicles and on the rear axle of many urban vehicles. Drum brake systems, in general, consist of a brake drum that rotates together with the vehicle wheel and, when the brake is actuated, an actuator moves the internal mechanisms that perform a movement from the center of the drum outwards, resulting in a force opposing the rotational movement of the vehicle axle.

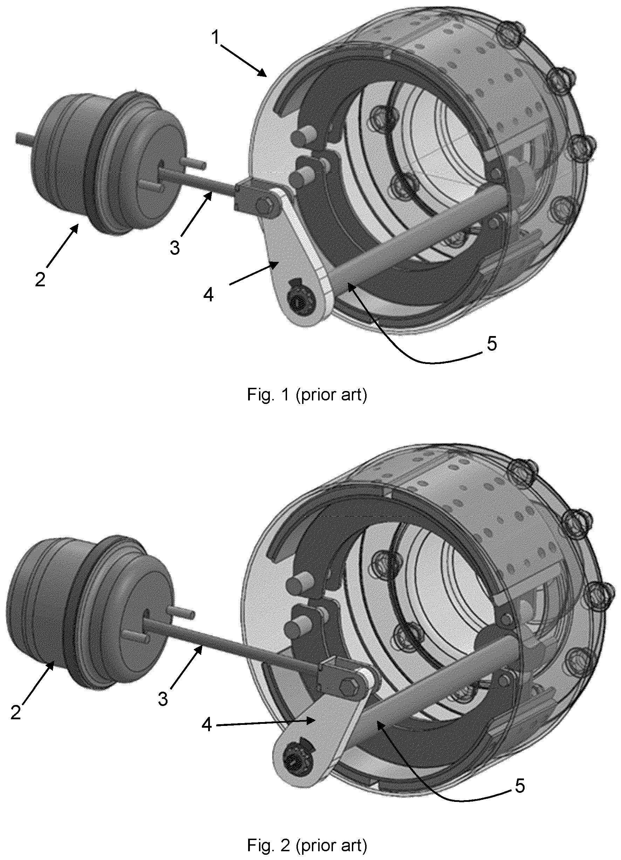

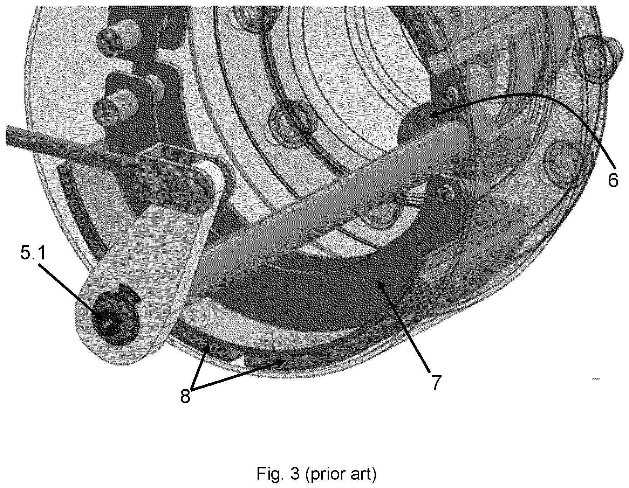

An example of a drum brake system is shown in Figs. 1 to 3. In these systems, when the driver presses the brake pedal, the brake chamber moves a slack adjuster (or brake ratchet) that rotates an S-camshaft. The S-cam then moves two brake shoes, via the inner pads, toward the brake drum. The shoes are provided with a friction material, which are intended to generate a friction force opposing the rotational movement of the vehicle axle. This friction material is often known as brake lining.

As the driver actuates the brake system, the friction material naturally wears out. This wear can lead to failures or malfunctions in the brake system, putting the lives of the driver and everyone on the roads where the vehicles travel at risk. Therefore, over time, the friction materials need to be replaced.

Many automakers or brake manufacturers set an average time to perform this maintenance. There are also many cases where a manual inspection of the component is performed by a specialist, but this takes time and sometimes it is necessary to disassemble the entire system to check the health of the friction material.

As a result, some solutions have been developed to enable monitoring of the wear of these friction materials in drum brake systems using an on-board electronic system.

As an example, US2011241866 shows one of these possible device configurations for monitoring brake systems. In US2011241866, two rotation sensors arranged in parallel are used, which operate together, using the Hall effect. The first sensor is intended to read the clearance generated between the adjuster mechanism and the S-camshaft. The second sensor, positioned in an additional structure to remain static in relation to the shaft, obtains the entire braking stroke. With this, the data from both sensors are added and correlated with the total stroke of the adjuster. However, this solution requires two sensors operating together to obtain the wear of the lining and, furthermore, requires the reading of the complete stroke of the braking movement, not to be confused with the solution of the present invention.

US2015377311 shows a solution similar to the previous one, but using a structure that houses the sensor and keeps it static in relation to the S-camshaft of the drum brake. In US2015377311 it is described that the sensor is a potentiometer, such that with the movement of the shaft, caused by the actuation of the brake, an extension of the sensor is rotated and, with this, it is possible to measure the angular displacement. Again, such an arrangement causes the sensor to read data related to the entire braking process.

Patent US5253735 shows one or two magnets attached to the S-camshaft and a static sensor configured to read the angular position of the magnets. The solution presented by that patent is similar to those previously mentioned, since with this configuration the sensor is responsible for reading the entire brake actuation process, not just data related to lining wear.

Extinct patent PI 9608527-4 shows a device for indicating wear on brake linings. This solution uses a magnetically coded disc divided into three sectors and a lid that houses sensors in different positions. The disc is attached to the shaft and the sensor remains static to read the disc's coding as the brake is actuated. This solution therefore reads the entire brake actuation process.

Document BR 11 2013 024583-2 shows a more specific construction for a structure that houses the sensor. This structure is a disc that contains a protrusion, where such protrusion is aligned with a recess formed in another structure fixed to the S-camshaft. This structure facilitates the assembly of the equipment in the brake system. However, the sensor remains static in relation to the magnet that rotates along the S-camshaft.

In view of this, it is possible to note that none of the solutions mentioned deal with the teachings of the present invention. The documents presented aim to monitor the wear of the friction material from a fixed structure, which reads the entire braking process, and is not capable of verifying only the wear caused to the material.

In this sense, the aim is to develop solutions that identify the movement of the brake system directly related to the wear of the friction material, providing efficiency and precision for monitoring the wear of the friction material.

Thus, from what can be inferred from the researched literature, no documents were found anticipating or suggesting the teachings of the present invention, so that the solution proposed here has novelty and inventive activity compared to prior art.

### Summary of the Invention

Thus, the present invention solves the problems of the prior art by monitoring the wear of the friction material based on a relative movement between the adjuster and the shaft, so that this relative movement is directly correlated with the wear of the friction material. For this purpose, wear monitoring is carried out by a monitoring device comprising a sensor assembly that perceives said relative movement, and a processing unit that correlates data on relative movement with the wear of the friction material. Therefore, the present invention promotes vehicle safety by providing more precise wear monitoring, contributing to preventive maintenance and durability of friction material and, consequently, contributing to reliability in the operation of brake systems.

Thus, in a first object, the present invention presents a device for monitoring wear of friction material in a drum brake system, in which the brake system comprises an adjuster (4) that moves an shaft (5) of the brake drum (1), and the monitoring device comprises a sensor assembly that perceives a relative movement between the adjuster (4) and the shaft (5), the sensor assembly being positioned in the brake system; and a processing unit (17) communicating with the sensor assembly to acquire data on the relative movement between the adjuster (4) and the shaft (5), the data on the relative movement between the adjuster (4) and the shaft (5) being correlated with the wear of the friction material.

In a second object, the present invention presents a system for monitoring the wear of friction material in a vehicle equipped with a drum brake system comprising an adjuster (4) that moves an shaft (5) of the brake drum (1), wherein the monitoring system comprises a friction material wear monitoring device as defined above; and a means for storing at least one movement data related to friction material wear; wherein a processing unit (17) of the monitoring device correlates a data of the relative movement between adjuster (4) and shaft (5) with said movement data related to wear of the friction material.

In a third object, the present invention presents a process for monitoring wear of friction material in a drum brake system comprising an adjuster (4) that moves a shaft (5) of the brake drum (1), from a step of actuating the drum brake system, wherein the monitoring process comprises the steps of perceiving a relative movement between the adjuster (4) and the shaft (5) by a sensor assembly; acquisition of data on the relative movement between the adjuster (4) and shaft (5) by a processing unit (17) communicating with the sensor assembly; and correlation, by the processing unit (17), of the data on the relative movement between the adjuster (4) and shaft (5) with the wear of the friction material.

These and other objects of the invention will be immediately appreciated by those skilled in the art and will be described in detail below.

### Brief Description of the Figures

In order to better define and clarify the content of this patent application, the following figures are presented:
Figs. 1 to 3 show different views of the schematic of a conventional drum brake system.
Fig. 4 exemplifies the invention monitoring process, illustrating a flowchart.
The set of Figs. 5 shows a first embodiment of the monitoring device of the invention.
Fig. 5a shows a view of an embodiment of the structure (9) fixed to the adjuster (4).
Fig. 5b shows the structure (9) of Fig. 5a, without the base (10), highlighting the housing (11).
Fig. 5c shows a front view of an embodiment of the housing (11).
Fig. 5d shows a rear perspective view of the housing (11).
Fig. 5e shows a perspective view of the housing (11), highlighting the head (12) fitted between the shaft (5) and the housing (11).
Fig. 5f shows a perspective view of the housing (11), highlighting the wall (115) positioned inside the housing (11).
Fig. 5g shows a longitudinal section view, showing the sensing module (14) positioned in the housing (11).
Fig. 5h shows the sensing module (14) of Fig. 4g rotated to the position shown in Fig. 5g.
The set of Figs. 6 shows a second embodiment of the monitoring device of the invention.
Fig. 6a shows a view presenting an embodiment of the second repercutor associated with the brake system.
Fig. 6b shows a front view of the adjuster (4) with said embodiment of the second repercutor.
Fig. 6c shows an isolated view of the embodiment of the structure (9), highlighting the structure (9) fixed to the adjuster (4) by means of the support (92).
Fig. 6d shows a detailed view of the device of the invention, highlighting the housing (11).
Fig. 6e shows a view of an embodiment of the head (12) coupled to the shaft (5) and a magnet (13) fixed to the head (12).
Fig. 6f shows a rear view of an embodiment of the structure (9), highlighting the interface (115) of the housing (11).
Fig. 6g shows a front view of an embodiment of the structure (9), highlighting the housing (11) fixed to the base (10).
Fig. 6h shows a view of an embodiment of the housing (11), highlighting the interface (115).
The set of Figs. 7 shows a third embodiment of the monitoring device of the invention.
Fig. 7a shows a view presenting an embodiment of the device of the present invention.
Fig. 7b shows an isolated view of the adjuster (4) with said embodiment of the device.
Fig. 7c shows an exploded view of the embodiment of the device of the present invention.
Fig. 7d shows in more detail the exploded view shown in Fig. 7c.
Fig. 8 shows an example with the magnet (13) being rotated in relation to the sensing module (14).
Fig. 9 shows a schematic of the magnet (13) in relation to the sensing module (14), with regard to the distance between them.
Fig. 10 shows a graphic display resulting from a test carried out with the device of the invention.
Fig. 11 shows a graph of brake wear x lining thickness obtained from tests with the device of the invention.

### Detailed Description of the Invention

An example of a conventional drum brake system is schematized in the set of Figs. 1 to 3. In these systems, a brake drum (1) rotates together with the vehicle wheel and, when the pedal is pressed by a driver, a brake chamber (2) moves a rod (3), which is fixed to a slack adjuster (4). Said adjuster (4) is mechanically associated with a shaft (5) of the drum brake. At the opposite end of the shaft (5) is arranged a "S" shaped cam (6) (often called S-cam), where said S-cam (6) moves the brake shoes (7) towards the brake drum (1). Said brake shoes (7) are provided with a friction material (8), which comes into contact with the inner part of the brake drum (1), generating a friction force in opposition to the rotational movement of the vehicle wheel.

As the lining (8) wears out due to friction caused during the braking process, a clearance between the friction material (8) and the drum (1) may appear. The automatic adjuster (4) has the function of correcting this slack between the brake lining (8) and the brake drum (1), keeping the distance between them constant and uniform, i.e., adjusting the proximity of these components when the brake system returns to the initial position. As a result, the adjuster (4) makes it possible to increase braking safety, since the lining (8) will be in the ideal position in relation to the brake drum (1) to restart the braking process, when necessary.

It is worth noting that this brief introduction to the conventional schematic of a drum brake system should not restrict the inventive concept proposed in this patent application. Furthermore, a known solution in the art for monitoring wear of the friction material (8) in brake systems is the electronic perception of the complete actuation of the shaft (5) by the adjuster (4), using a sensor fixed in relation to the shaft (5) to read the complete rotation of the shaft (5). Instead, the present invention bases the monitoring of the wear of the friction material (8) on the relative movement between the adjuster (4) and the shaft (5).

Thus, in a first object, the present invention presents a device for monitoring wear of friction material in a drum brake system, wherein the brake system comprises an adjuster (4) that moves a shaft (5) of the brake drum (1), and the monitoring device comprises a sensor assembly that perceives a relative movement between the adjuster (4) and the shaft (5), the sensor assembly being positioned in the brake system; and a processing unit (17) communicating with the sensor assembly to acquire data on the relative movement between the adjuster (4) and the shaft (5), the data on the relative movement between the adjuster (4) and the shaft (5) being correlated with the wear of the friction material.

In general, a relative movement between an observer O and a part P is perceived by the observer O when a part P moves in relation to the observer O. For the present invention, the relative movement of interest occurs between the adjuster (4) and the shaft (5), being an angular variation. Said relative movement occurs because the shaft (5) rotates inside the adjuster (4) seeking an advantageous position, so as to maintain an adequate slack between the friction material (8) and the brake drum (1), whenever the friction material is worn by the braking process. This rotation is provided by the internal mechanism of the automatic adjuster (4) when it senses that the friction material (8) has been worn. In one embodiment, the relative angular movement between adjuster (4) and shaft (5) is proportional to the wear of the friction material (8). In this context, the present invention, in one embodiment, provides a sensor assembly that can read this movement generated between the S-camshaft and the adjuster.

Thus, a processing unit (17) performs said correlation of the relative movement data between adjuster (4) and shaft (5) with a movement data related to the wear of the friction material.

For this purpose, the monitoring device of the invention has a sensor assembly positioned in the brake system to perceive the relative movement between the adjuster (4) and the shaft (5). The relative movement is converted into relative movement data between the adjuster (4) and the shaft (5), this data being readable by the processing unit (17). For purposes of the present invention, the processing unit (17) is any electronic component capable of following a set of predefined instructions, reading motion data, performing processing of this data and data correlation. In one embodiment, the processing unit (17) is a microcontroller or a microprocessor.

Thus, the conversion of relative movement into data is performed by the sensor assembly that generates the relative movement data between adjuster (4) and shaft (5). In one embodiment, the sensor assembly generates the relative movement data between adjuster (4) and shaft (5) based on an angular variation related to the relative movement between adjuster (4) and shaft (5). In one embodiment, the data is generated from a linear variation related to the relative movement between adjuster (4) and shaft (5). In this last embodiment, the linear movement is generated mechanically by the sensor assembly itself, converting the angular movement performed by the relative movement between adjuster (4) and shaft (5).

In one embodiment, said conversion is provided by the sensor assembly to sense the relative movement between adjuster (4) and shaft (5). Additionally, the said perception is a physical sensation obtained by mechanical, magnetic and/or electronic means.

In view of this, the sensor assembly has a first repercutor associated with the shaft (5); and a second repercutor associated with the brake system. With this, the second repercutor perceives a movement of the first repercutor, so that this movement corresponds to the relative movement between adjuster (4) and shaft (5).

To do so, the second repercutor is positioned on one of the brake system components - brake pedal, brake chamber (2), rod (3), adjuster (4), etc. - so that the second repercutor perceives the movement of the first repercutor based on a variation related to the relative movement between adjuster (4) and shaft (5).

In one embodiment, the variation related to the relative movement between adjuster (4) and shaft (5) is an angular variation between the first repercutor and the second repercutor. In one embodiment of the angular variation related to the relative movement between adjuster (4) and shaft (5), the second repercutor is associated with adjuster (4).

Thus, the sensor assembly perceives the relative movement between adjuster (4) and shaft (5) and generates data on said relative movement. With this, the processing unit (17) communicates with the sensor assembly, receiving data on the relative movement between adjuster (4) and shaft (5) to correlate this with the wear of the friction material.

Furthermore, the device for monitoring of the invention has a structure (9) provided with a housing (11) and a base (10) associated with the adjuster (4). In one embodiment, the structure (9) houses the processing unit (17). In a further embodiment, the second repercutor is a sensing module (14) positioned in the structure (9) by means of the housing (11).

In one embodiment, the housing (11) of the structure (9) is fixed to the base (10), so that the second repercutor is coordinated with the movement of the adjuster (4). In a further embodiment, the housing (11) of the structure (9) has an interface between the first repercutor and the second repercutor. In this way, the housing interface (11) provides a predetermined distance, separating the first repercutor from the second repercutor for the perception of the relative movement between the adjuster (4) and the shaft (5). Thus, the present invention promotes the absorption of possible axial differences in relation to the associations between the components of the device, since dimensional tolerances with high variation are foreseen arising from the manufacturing process of such components, in addition to the mechanical wear of the same.

Additionally, the first repercutor is coordinated to the movement of the shaft (5), being positioned next to the housing interface (11) of the structure (9). In an embodiment in which the first repercutor is integral to the movement of the shaft (5) and the second repercutor is integral to the movement of the adjuster (4), the variation related to the relative movement between the adjuster (4) and the shaft (5) is angular between the first repercutor and the second repercutor.

Alternatively, in one embodiment, the variation related to the relative movement between adjuster (4) and shaft (5) is of another angular variation. In this embodiment, the first repercutor is a sector of the shaft (5) and the second repercutor is an arm connected to the adjuster (4) and disposed on the sector of the shaft (5), in which the arm perceives the movement of the sector of the shaft (5), this movement being related to the relative movement between adjuster (4) and shaft (5).

In a second object, the present invention presents a system for monitoring the wear of friction material in a vehicle equipped with a drum brake system comprising an adjuster (4) that moves an shaft (5) of the brake drum (1), wherein the system for monitoring comprises a device for monitoring the wear of friction material as defined above; and a means for storing at least one movement data related to friction material wear; wherein, a processing unit (17) of the monitoring device correlates a data on the relative movement between the adjuster (4) and the shaft (5) with said movement data related to the wear of the friction material.

In one embodiment, the means for storing movement data related to the wear of the friction material assembles a historic of brake system operation for the vehicle driver to check the health of the friction material (4). Additionally, the system for monitoring can be installed in any S-cam drum brake system, as a kit for monitoring, measuring and identifying lining wear (8), avoiding accidents by obtaining wear with greater precision. In one embodiment, the system of the present invention is implemented in drum brakes during their manufacture. In another embodiment, said system is installed in drum brakes already previously manufactured.

In this way, as the brake is actuated, the sensor assembly is able to monitor the relative movement between the adjuster (4) and the shaft (5). This relative movement occurs due to the wear of the friction material (8) which, as previously shown, the adjuster (4) tends to correct the existing slack between the friction material (8) and the brake drum (1). This arrangement of the device for monitoring of the present invention, by detecting the relative movement between adjuster (4) and shaft (5), prevents the sensor assembly from capturing any interference caused by slacks between the mechanical components of the brake system, since a variation in position between shaft (5) and adjuster (4) means that there is wear on the friction material (8).

In one embodiment, the communication between the processing unit (17) and the sensor assembly is a wireless communication, wherein the processing unit (17) is positioned on the chassis of the vehicle and the sensor assembly is positioned on the brake system. In another embodiment, the communication between the processing unit (17) and the sensor assembly is a wired communication.

In a further embodiment, the processing unit (17) communicates with a device that makes friction material wear data available to a user. This data can be made available to the vehicle driver via a display on board the vehicle or via a smartphone. This data can also be made available to a remote server.

Furthermore, the device for monitoring is communicative with a remote station, wherein the remote station receives movement data related to the wear of the friction material. In one embodiment, the remote station manages fleets of vehicles, so that the present invention promotes the reliability of the fleet of vehicles by monitoring the wear of the respective linings (8) of the vehicles.

In a third object, the present invention presents a process for monitoring wear of friction material in a drum brake system comprising an adjuster (4) that moves an shaft (5) of the brake drum (1), from a step of actuating the drum brake system, wherein the process for monitoring comprises the steps of perceiving a relative movement between the adjuster (4) and the shaft (5) by a sensor assembly; acquiring data on the relative movement between the adjuster (4) and the shaft (5) by a processing unit (17) communicating with the sensor assembly; and correlating, by the processing unit (17), the data on the relative movement between the adjuster (4) and the shaft (5) with the wear of the friction material.

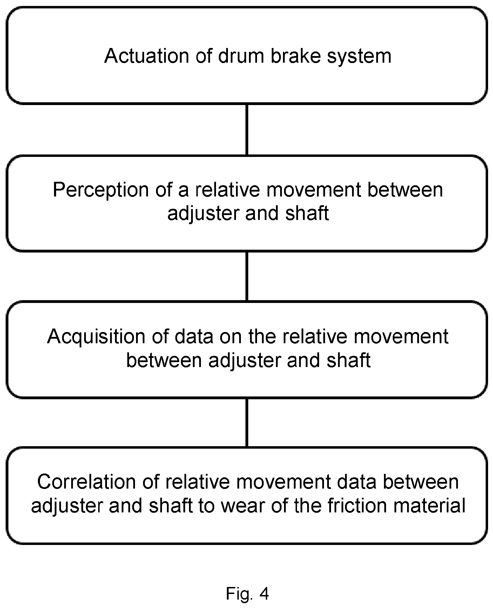

In one embodiment, said process is implemented with the device for monitoring described previously. In one embodiment, said process follows the flowchart illustrated in Fig. 4.

Thus, the brake system is actuated by the brake pedal, moving the rod (3) that moves the adjuster (4) which, in turn, moves the shaft (5). Naturally, the friction material (8) wears out, creating a slack between the friction material (8) and the brake drum (1), where the adjuster (4) compensates for said slack.

As a result, the brake system presents a relative movement between adjuster (4) and shaft (5). Thus, the process of the invention has the step of perceiving the relative movement between adjuster (4) and shaft (5) by means of the sensor assembly.

Finally, the process of the invention has a step of converting the relative movement between adjuster (4) and shaft (5), by the sensor assembly, into data on the relative movement between adjuster (4) and shaft (5), in which the data on said relative movement is converted on the basis of a variation in movement of the first repercutor perceived by a second repercutor. In one embodiment, the variation in movement is angular. Additionally, the second repercutor is associated with the brake system, while the first repercutor is associated with shaft (5).

The process then implements the acquisition of the relative movement data between adjuster (4) and shaft (5) by means of the processing unit (17). With the said relative movement data, the processing unit (17) performs the correlation of the relative movement data between adjuster (4) and shaft (5) with the wear of the friction material (8).

In this way, the process of the invention provides a more accurate correlation with the continuous wear of the friction material (8). In one embodiment, said correlation is of the relative movement data between adjuster (4) and shaft (5) with a movement data related to the wear of the friction material.

Based on this, wear data is made available to a user, so that he or she has access to the monitoring of the friction material (8). This data can be made available to a display on board the vehicle (e.g., on-board computer), to a user's smartphone, to a remote server or a combination of these alternatives.

The present invention can be applied to any drum brake system, and can be adapted to disc brakes, regardless of the type of vehicle, which can be urban vehicles, passenger transport vehicles, cargo vehicles, road implements, etc.

The examples shown here are intended only to exemplify one of the numerous ways of carrying out the invention, without, however, limiting its scope.

### Example 1

The device of the present invention was developed for applications in drum brake systems. A conventional drum brake system is schematized in the set of Figs. 1 to 3.

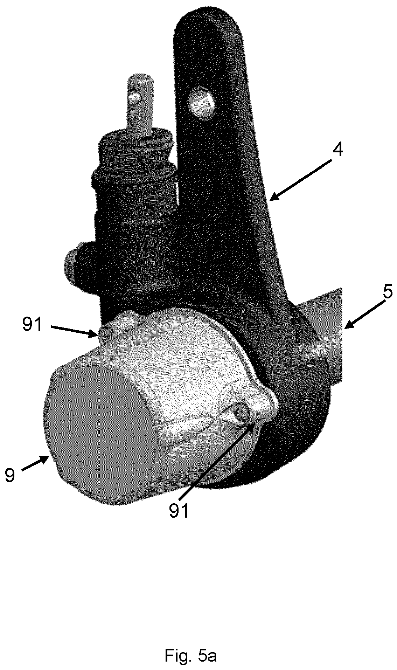

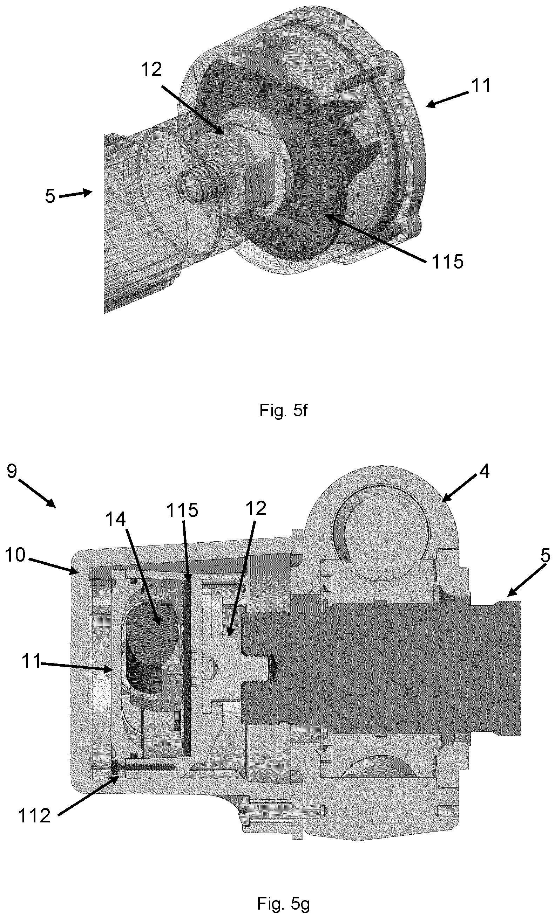

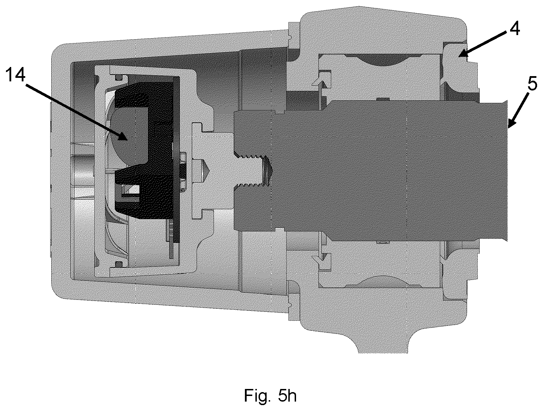

The device for monitoring of the example implements the process illustrated in the flowchart of Fig. 4. For this purpose, the device of the example has a sensor assembly and a processing unit (17), positioned in the brake system by means of the structure (9) having a base (10) screwed to the adjuster (4) through the holes (91) as shown in Fig. 5a.

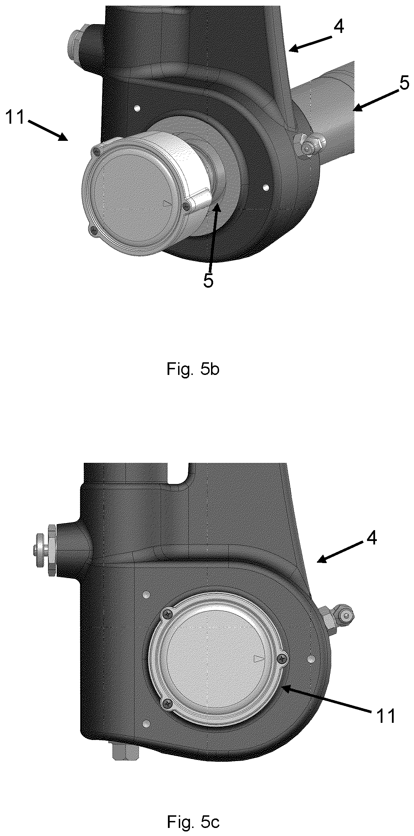

Removing the base (10), Fig. 5b shows the housing (11) directly attached to the shaft (5). Fig. 5c shows a front view of the housing (11) covered by a lid that closes the housing (11) by screwing, facilitating maintenance of the device.

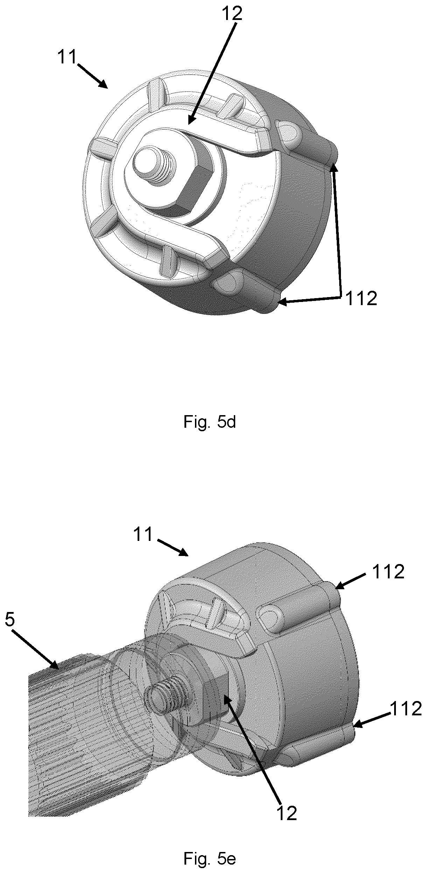

Fig. 5d shows a rear view of the housing (11), highlighting the head (12) that allows the housing (11) to be directly coupled to the shaft (12), with the head (12) fitted into a U-shaped projection formed on the surface of the housing (11). The U-shaped geometry allows for centralized alignment between the head (12) and the sensor inside the housing (11), and also prevents the housing (11) from moving away from the head (12) as the latter has a fit that functions as a drawer. Still, this fit allows for a relative angular movement between the head (12) coordinated to the shaft (5) and the housing (11) coordinated to the structure (9), which in turn is fixed to the frame of the adjuster (4). With this, the head (12) has a threaded end for coupling to the shaft (5).

In this way, the head (12) defines a first repercutor that is coordinated to the movement of the shaft (5) as can be seen in Fig. 5e. In addition, the housing (11) has reliefs (112) on its periphery, which fit into the base (10), blocking the movement of the housing (11) together with the shaft (5), so that the housing (11) remains coordinated to the adjuster (4). Furthermore, the reliefs (112) prevent improper assembly of a pre-arranged position, since the reliefs are arranged in a non-uniform manner on the periphery of the housing (11).

Furthermore, the housing (11) has an interface (115) between the first repercutor and a second repercutor housed inside the housing (11), promoting a predetermined spacing between the first repercutor and the second repercutor. For example, the second repercutor is a sensing module (14) being a sensor distanced from the first repercutor by means of the interface (115) together with the head (12), so that the sensor perceives the movement of the first repercutor.

Thus, the device of the example includes the concept of the invention by being provided with a sensor assembly that perceives the relative movement between the adjuster (4) and the shaft (5) as illustrated by the different positions of the sensing module (14) in relation to the shaft (5), the sensing module (14) being associated with the adjuster (4). Thus, the relative movement between the adjuster (4) and the shaft (5) is converted into data of said relative movement based on the angular variation between the sensing module (14) and a magnet (13) coupled to the head (12).

Finally, a processing unit (17) receives the data of said relative movement and correlates the data with a movement data related to the wear. For example, the processing unit (17) is also housed in the housing (11).

### Example 2

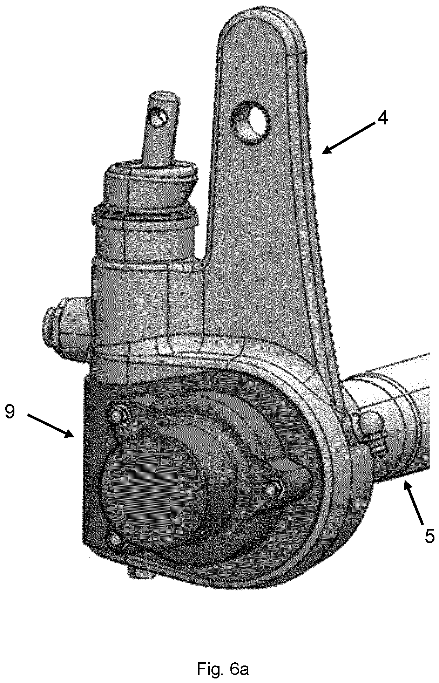

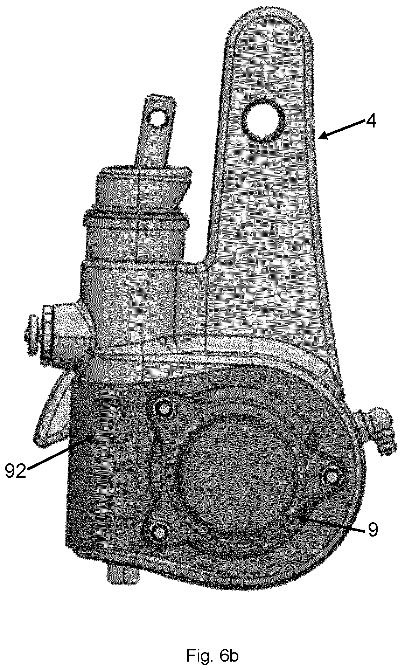

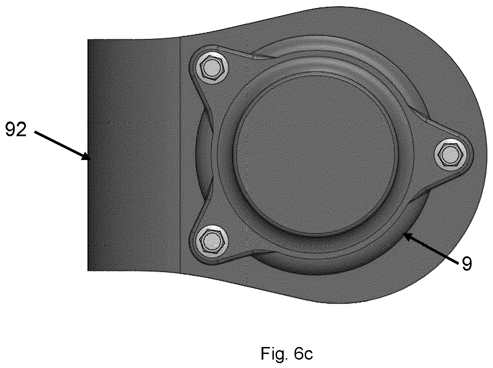

The device of movement of the example has a structure (9) fixed to the adjuster (4) by means of a support (92) surrounding the adjuster (4) in order to adapt to the shape of the adjuster (4), as shown in Figs. 6a to 6c. Furthermore, the support (92) is adhered to the adjuster (4).

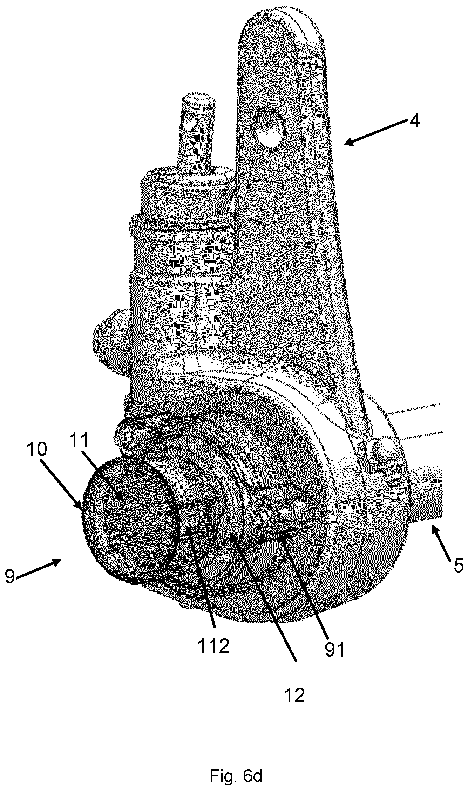

For the arrangement of the components of the device of the present invention, the structure (9) is of a single body or divided into two parts: a base (10) and a housing (11) as shown in figure 6d. Thus, the structure (9), being of a single body or divided into two parts, is compatible for fixation with a plurality of adjusters (4).

Thus, the base (10) is screwed by three fastening elements (91) onto the support (92). With this, the housing (11) is fitted inside the base (10), being locked by projections (112) arranged on its periphery in contact with the inside of the housing (11).

To perceive the relative movement between adjuster (4) and shaft (5), a sensor assembly in the example is formed by the first repercutor being a magnet (13), and a second repercutor being a sensor (14) that uses the Hall effect principle to read the angular variation resulting from the relative movement between shaft (5) and adjuster (4). Thus, the relative movement between adjuster (4) and shaft (5) is converted into relative movement data.

Still in Fig. 6d, the housing (11) houses the sensor (14). With this, the sensor (14) is coordinated to the housing (11) fixed to the structure (9), in which the sensor (14) is arranged at a mobile end of the housing (11), inside of it, so that the sensor (14) can move axially inside the housing (11), however the projections of the housing (11) prevent the rotation of the sensor (14) in relation to the adjuster (4) and prevent assembly outside of a pre-arranged position, since the projections are not arranged uniformly.

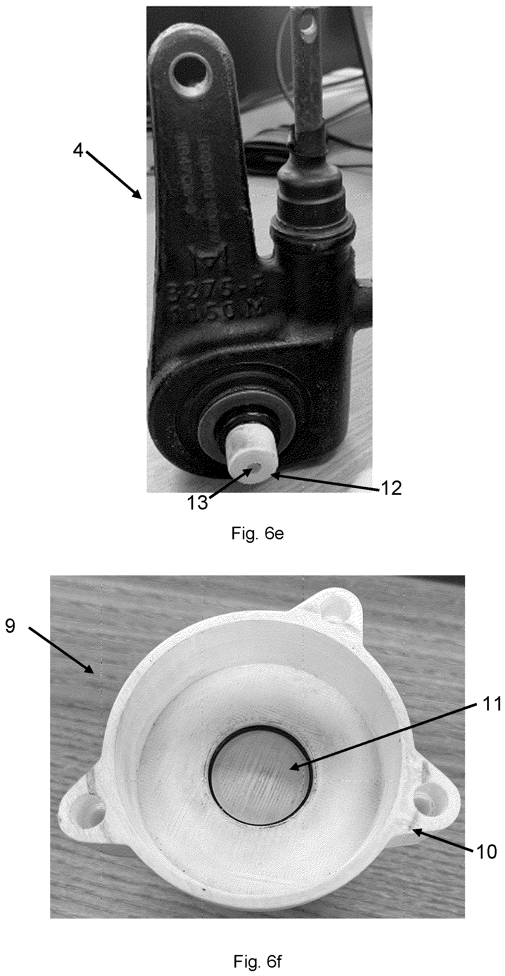

Therefore, the housing (11) accommodates the sensor (14), such that the sensor (14) is within a pre-defined distance in relation to the magnet (13), which is fixed to the shaft (5) tip of the S-cam (6) as can be seen in Fig. 6e. Furthermore, the housing part (12) fixes the magnet (13) to the shaft (5), whereby the magnet (13) rests against the movable end of the housing (11) and is free to rotate in relation to the sensor (14) fixed to the adjuster (4). From this, the thickness of the movable end of the housing (11) allows the predefined distance between the magnet (13) and the sensor (14) to be met.

Furthermore, Fig. 6f shows the housing (11), and the sensor (14), when accommodated in the housing (11), can move axially inside the housing (11) by means of the movable end of the housing (11), compensating for axial differences during assembly of the device and, mainly, maintaining the pre-defined distance between the sensor (14) and the magnet (13) for correct reading of the relative movement between the automatic adjuster (4) and the shaft (5). Fig. 6f also shows a sealing ring next to the movable end of the housing (11), so that the housing part (12) is sealed.

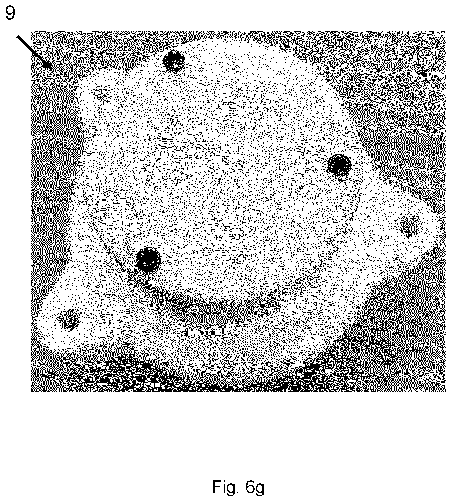

Fig. 6g shows the housing (11) coupled to the base (10), forming the structure (9). Furthermore, the base (10) is fixed to the adjuster (4) through fastening elements arranged on the periphery of the base (10), dispensing with the use of a support (92). To close the base (10), a lid is fixed to the housing (11).

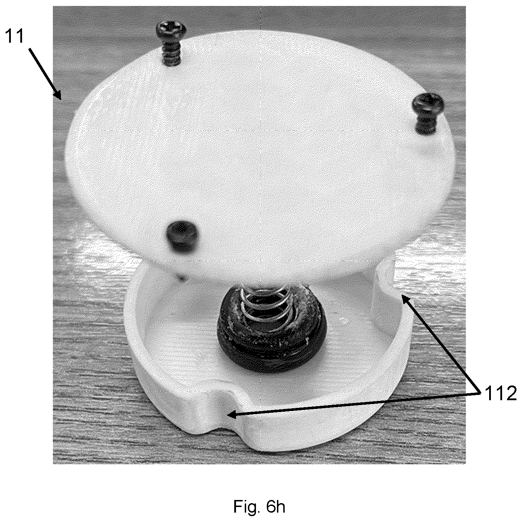

Fig. 6h shows the housing (11) removed from the base (10), with the spring adjusting the axial distance between the sensor (14) and the magnet (13), eliminating the need for adaptations such as washers. To accommodate the sensor (14) inside the housing (11), connected to a battery and an embedded circuit of the sensor (14), insulation is carried out using a resin covering at least the sensor (14). In addition, the housing (11) has an opening that allows the battery to be replaced.

Additionally, the embedded circuit of the sensor (14) has a radio module, allowing wireless communication either for communication with a control unit fixed to the chassis or for powering and receiving signals via cabling. With this, the sensor (14) sends data on the relative movement between the adjuster (4) and shaft (5) to a processing unit (17).

In this example, the processing unit (17) is attached to a surface opposite the surface housing the sensor (14). This allows wear monitoring to be carried out onboard the vehicle itself, so that this data is made available to the driver and, jointly, to a server or remote user. The processing unit (17) is equipped with on-board intelligence that executes an algorithm. Said algorithm correlates previously stored data with the data read by the sensor (14). The previously stored data are relative angular variations between the adjuster (4) and the shaft (5) correlated with wear data. In turn, the wear data are data on brake drum (1) wear, wear of the lining (8) with excess material and wear of rollers with excess measurement next to the shaft (5).

### Example 3

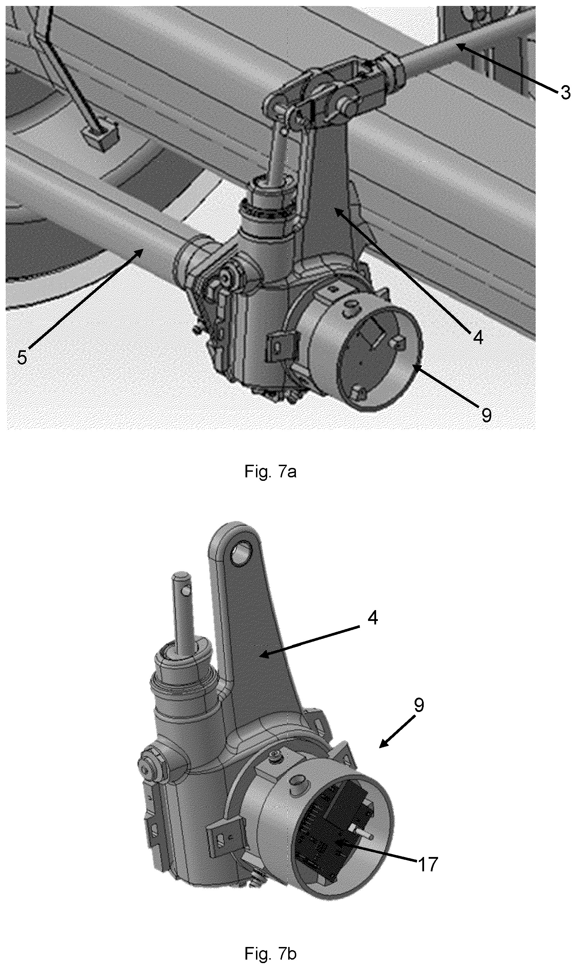

The monitoring device of the example is coupled to the drum brake system as exemplified in figure 7a. The structure (9) is coupled directly to the automatic adjuster (4), such that when the automatic adjuster (4) is displaced by the rod (3) of the brake chamber (2), the structure (9) follows its rotation movement. Fig. 7b shows an isolated view of the automatic adjuster (4) with the structure (9) fixed to it, and also a processing unit (17).

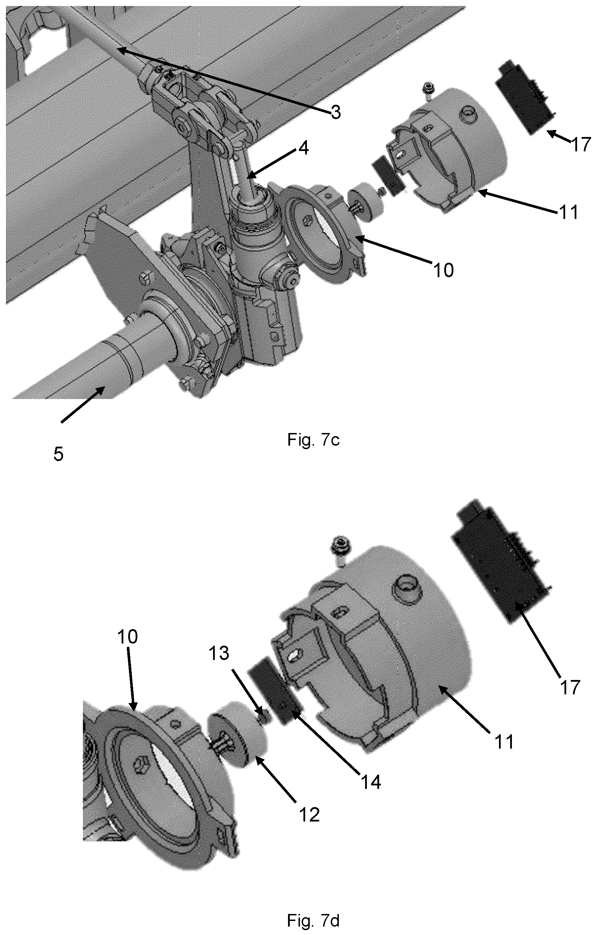

As can be seen in Fig. 7c, the structure (9) is provided with a base (10) and a housing (11). The base (10) is responsible for fixing the structure assembly (9) to the automatic adjuster (4). Said base (10) has tabs for fixing the structure (9) to the automatic adjuster (4), where this fixing can occur by means of permanent or non-permanent fixing elements.

In this example, the base (10) has two levels, a first level for fixing with the adjuster (4) and a second level for fixing with the housing (11), where the second level has a radius smaller than the radius of the first level. On the second level, projections are formed for fixing with the housing (11), where these projections are formed along the perimeter of this second level. Said projections are fitted into cavities formed in the perimeter of the housing (11), so that both are geometrically compatible.

In figure 7d, where the exploded view with more details of the device is shown, it is possible to see that the sensor (14) is coupled to the housing (11). The housing (11) has a surface for the sensor (14) to be accommodated, such that the sensor (14) is within a pre-defined distance in relation to the magnet (13), which is fixed to the shaft (5) tip of the S-cam (6).

In the construction of this example, the magnet (13) was fixed to the shaft (5) tip through a plastic housing part (12), which also has the function of moving the magnetic field away from the metal material of the shaft, to prevent this field from influencing the collected data. In this way, the magnet (13) is free to rotate in relation to the sensor (14) fixed to the cover (11). Thus, in this configuration, the sensor (14) can read the rotational movement that the shaft (5) makes in relation to the automatic adjuster (4) itself, since the sensor (14) moves together with the automatic adjuster (4).

Still in Fig. 7d, it is possible to see that the processing unit (17) is attached to a surface opposite the surface that houses the sensor (14). This allows wear monitoring to be carried out on board the vehicle itself, so that this data is made available to the driver and, jointly, to a server or remote user.

### Example 4

Tests and proof of concept were also carried out, using the AS5600 Hall effect sensor. Certainly, other sensor models can be used to implement the concept proposed in the invention, so that the example given here does not restrict its scope.

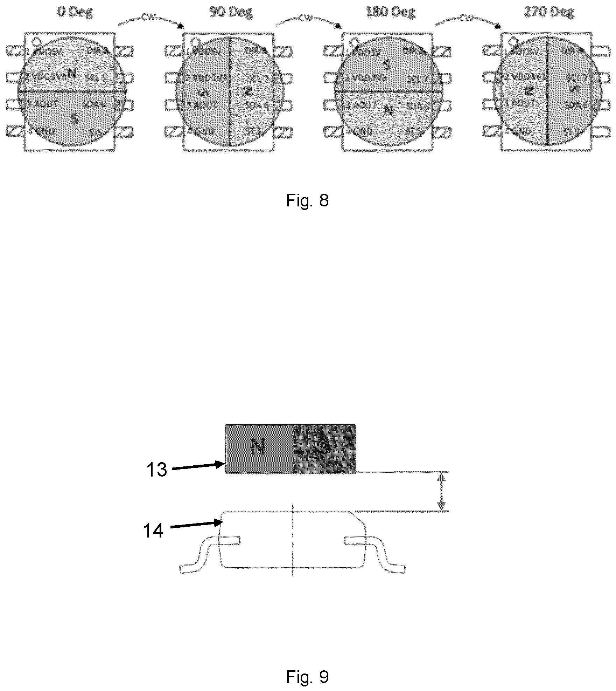

Based on this, Figs. 8 and 9, taken from the AS5600 component datasheet to clarify its operation, show respectively an example of the angular variation of the magnet (13) in relation to the sensor (14) and a recommended distance range between the magnet (13) and the sensor (14). This distance range was considered when assembling the sensor (14) to the housing (11) of the structure (9). In this example, the interface (115) between the sensor and the magnet is a partition of the housing (11).

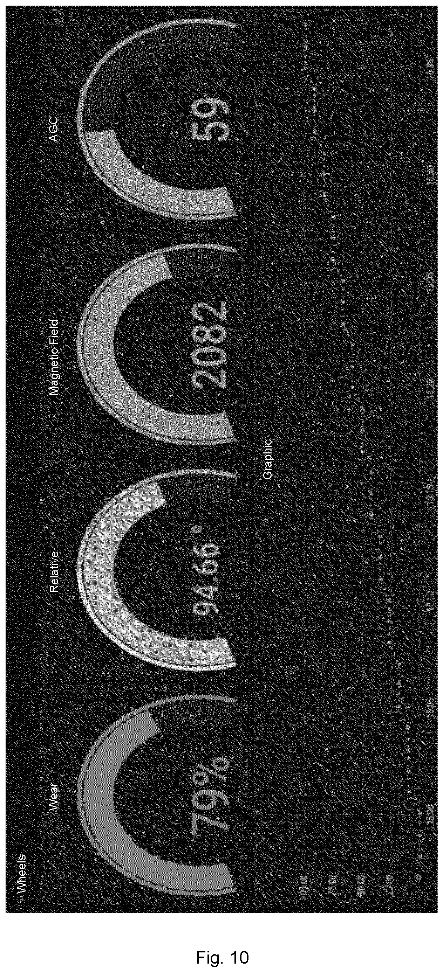

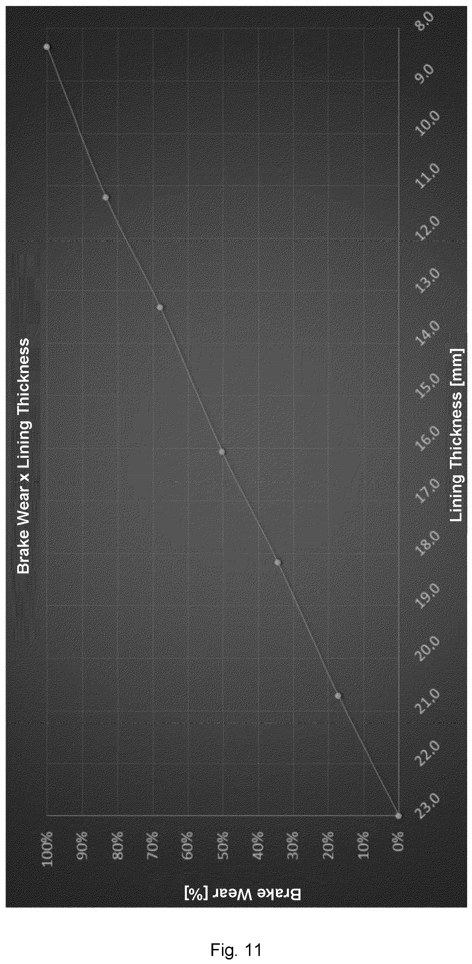

In these tests, from the collected data, it was possible to obtain different parameters, as shown in figure 10, on the percentage of lining wear (8) and the relative angular movement between adjuster (4) and shaft (5). Furthermore, in Fig. 11 it is possible to verify the test results of lining wear [%] versus lining thickness [mm].

Those skilled in the art will appreciate the knowledge presented herein and will be able to reproduce the invention in the embodiments presented and in other variants and alternatives, covered by the scope of the following claims.

## Claims

1. Device for monitoring wear of friction material in a drum brake system, wherein the brake system comprises an adjuster (4) that moves a shaft (5) of the brake drum (1), the monitoring device being **characterized in that** it comprises:
a. a sensor assembly that senses a relative movement between the adjuster (4) and the shaft (5), with the sensor assembly positioned in the brake system; and
b. a processing unit (17) communicating with the sensor assembly to acquire data on the relative movement between the adjuster (4) and the shaft (5), the data on the relative movement between the adjuster (4) and the shaft (5) being correlated with the wear of the friction material.

2. Device for monitoring, according to claim 1, **characterized in that** the relative movement between adjuster (4) and shaft (5) is an angular variation, in which the processing unit (17) performs said correlation of the relative movement data between adjuster (4) and shaft (5) with movement data related to the wear of the friction material.

3. Device for monitoring, according to claim 1, **characterized in that** the sensor assembly comprises:
a. a first repercutor associated with shaft (5); and
b. a second repercutor associated with the brake system, sensing a movement of the first repercutor, so that this movement corresponds to the relative movement between adjuster (4) and shaft (5).

4. Device for monitoring, according to claim 3, **characterized in that** the second repercutor is associated with the adjuster (4).

5. Device for monitoring, according to claim 3, **characterized in that** the second repercutor comprises a sensing module (14) positioned in a structure (9), in which the structure (9) comprises a base (10) associated with the adjuster (4), and a housing (11) accommodating the sensing module (14).

6. Device for monitoring according to claim 5, **characterized in that** the housing (11) of the structure (9) is fixed to the base (10) and comprises an interface between the first repercutor and the second repercutor.

7. Device for monitoring, according to claim 6, **characterized in that** the first repercutor is coordinated to the movement of the shaft, positioned next to the interface of the housing (11) of the structure (9).

8. System for monitoring wear of friction material in a vehicle provided with a drum brake system comprising an adjuster (4) that moves a shaft (5) of the brake drum (1), the monitoring system being **characterized in that** it comprises:
a. a device for monitoring wear of friction material as defined in claim 1; and
b. a means of storing at least one movement data relating to the wear of friction material;
wherein, a processing unit (17) of the monitoring device converts a data of the relative movement between adjuster (4) and shaft (5) into said movement data related to the wear of the friction material.

9. System for monitoring according to claim 8, **characterized by** the monitoring device being communicative with a remote station, in which the remote station receives movement data related to the wear of the friction material.

10. Process for monitoring wear of friction material in a drum brake system comprising an adjuster (4) that moves a shaft (5) of the brake drum (1), from a step of actuating the drum brake system, the monitoring process being **characterized in that** it comprises the following steps:
a. perception of a relative movement between adjuster (4) and shaft (5) by a sensor assembly positioned in the brake system;
b. acquisition of data on the relative movement between the adjuster (4) and the shaft (5) by a processing unit (17) communicating with the sensor assembly; and
c. correlation, by the processing unit (17), of the data on the relative movement between the adjuster (4) and the shaft (5) with the wear of the friction material.

11. Process for monitoring, according to claim 10, **characterized in that** the correlation is of the relative movement data between adjuster (4) and shaft (5) with a movement data related to the wear of the friction material.

12. Process for monitoring, according to claim 10, **characterized in that** it comprises a step of converting the relative movement between adjuster (4) and shaft (5), by the sensor assembly, into a data on the relative movement between adjuster (4) and shaft (5), in which, the said relative movement is converted on basis of a variation in movement of a first repercutor associated with the shaft (5), the variation being perceived by a second repercutor.

13. Process for monitoring, according to claim 12, **characterized in that** the second repercutor is associated with the brake system.

14. Process for monitoring, according to claim 10, **characterized in that** the data on the relative movement between the adjuster (4) and the shaft (5) is correlated to the continuous wear of the friction material.
